# FASCICULE DE BREVET EUROPEEN

(11) **EP 3 737 590 B1**
(45) Date de publication et mention de la délivrance du brevet: **13.04.2022**
(21) Numéro de dépôt: 18839827.5
(22) Date de dépôt: 13.12.2018
(51) Int. Cl.: B60R 21/02

(54) **AGENCEMENT D'UN CLOISONNEMENT POUR UN ESPACE INTÉRIEUR DE CHARGEMENT DE VÉHICULE UTILITAIRE, ET VÉHICULE COMPORTANT UN TEL AGENCEMENT**
ANORDNUNG EINER TRENNWAND FÜR EINEN INNENLADERAUM EINES NUTZFAHRZEUGES UND FAHRZEUG MIT EINER SOLCHEN ANORDNUNG
ARRANGEMENT OF A PARTITION FOR AN INTERIOR LOADING SPACE OF A UTILITY VEHICLE, AND VEHICLE COMPRISING SUCH AN ARRANGEMENT

(30) Priorité: 08.01.2018 FR 1850133
(43) Date de publication de la demande: 18.11.2020
(73) Titulaire: PSA Automobiles SA, 78300 Poissy (FR)
(72) Inventeur: VIRY, Patrick, 25200 MONTBELIARD (FR); VAZQUEZ, Ruben, 36157 PONTEVEDRA (ES)
(86) Numéro de dépôt international: PCT/FR2018/053251
(87) Numéro de publication internationale: WO 2019/135038

(56) Documents cités:
- AU-A1- 2006 249 287
- FR-A1- 3 010 017
- FR-A1- 3 010 018

## Description

L'invention se rapporte au domaine de l'aménagement intérieur des véhicules automobiles de type utilitaire.

Les véhicules utilitaires doivent offrir un compromis entre, d'une part, proposer un espace de chargement le plus important possible et, d'autre part, garantir une sécurité optimale à ses utilisateurs, notamment en empêchant le chargement de pénétrer de manière intempestive dans l'habitacle. Ainsi, les réglementations actuelles requièrent de prévoir une structure d'arrêt de charge, cette structure d'arrêt formant généralement une cloison séparant l'espace de chargement de l'habitacle du véhicule.

Il est par ailleurs connu des véhicules utilitaires comportant deux rangées de siège, une rangée avant (ou première rangée) comportant deux ou trois sièges, et une rangée arrière (ou deuxième rangée) comportant trois sièges. Dans ce type de véhicule, il est généralement possible de pouvoir retirer ou escamoter une partie ou la totalité des sièges de la rangée arrière, afin de libérer un volume supplémentaire pour le transport de marchandises, en particulier pour le transport d'objets longs. Le document FR 3 010 017 montre un exemple de cloison intérieure rigide, formant une structure d'arrêt de charge. Cette cloison est transversale à la direction longitudinale du véhicule, séparant ainsi l'espace de chargement de l'habitacle du véhicule.

Le document AU2006249287 décrit un agencement comprenant un cloisement à l'intérieur d'un véhicule, ledit cloisement étant adapté pour diviser l'intérieur du véhicule en deux zones distinctes, ledit agencement étant conforme au préambule de la revendication 1.

Le document FR3010018 décrit un agencement d'un cloisonnement pour un espace intérieur de chargement de véhicule utilitaire, ledit agencement comprenant un panneau mobile grillagé configuré pour séparer ledit espace intérieur de chargement et l'habitacle, le panneau mobile grillagé étant apte à coulisser d'une position derrière une deuxième rangée de siège à une autre position derrière une première rangée de siège.

Afin d'optimiser le volume de chargement lorsque les sièges de la deuxième rangée sont escamotés, la cloison divulguée dans le document FR 3 010 017 est mobile en translation. Ainsi, la cloison est apte à coulisser d'une position reculée, dans laquelle elle se situe derrière la deuxième rangée de sièges, vers une position avancée, dans laquelle elle se situe derrière la première rangée de sièges. On augmente ainsi l'espace de chargement du véhicule lorsque les sièges arrière sont escamotés.

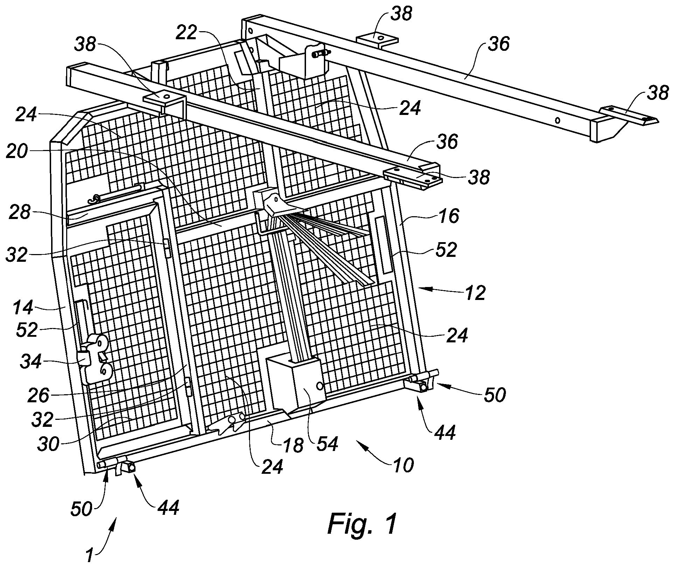

Toutefois, afin que la cloison mobile assure correctement son rôle de structure d'arrêt de charge, il est nécessaire qu'elle soit fermement maintenue dans chacune des deux positions, avancée et reculée. Comme visible sur les figures 1, 5 et 7, la cloison mobile comporte à cet effet un crochet 26, en prise :
- soit, pour la position reculée de la cloison, dans un verrou 31 situé en partie basse du dossier du siège central de la deuxième rangée (cf. figure 5) ;
- soit, pour la position avancée de la cloison, dans un verrou 34 situé en partie haute du dossier ce même siège (cf. figures 1 et 7).

Cette solution nécessite donc qu'au moins l'un des sièges de la deuxième rangée soit équipé d'un verrou. Il s'agit cependant d'un inconvénient important, car cela empêche que les sièges du véhicule soient identiques pour toutes les versions, par exemple dans le cas où la gamme comporte à la fois des véhicules utilitaires et des véhicules de tourisme.

La présente invention a pour but de remédier aux inconvénients de l'état de la technique, et plus particulièrement ceux ci-dessus exposés, en proposant un agencement d'un cloisonnement intérieur pour un espace intérieur de chargement de véhicule utilitaire comportant une cloison mobile et permettant notamment d'équiper le véhicule avec les mêmes sièges, que ce soit pour la version utilitaire ou le version tourisme.

A cet effet, l'invention concerne un agencement d'un cloisonnement pour un espace intérieur de chargement de véhicule utilitaire, ledit agencement comprenant les caractéristiques de la revendication 1.

Ainsi, en prévoyant un panneau de séparation qui forme une cloison mobile autoportante, il n'est plus nécessaire que le panneau de séparation soit fixé aux sièges arrière. L'agencement conforme à l'invention est donc plus simple à assembler, et plus simple à manipuler pour les utilisateurs. En outre, les mêmes sièges peuvent être utilisés par le constructeur, que ce soit pour une version utilitaire ou de tourisme du véhicule. Enfin, en position avancée, le panneau de séparation peut être positionné au plus près de la rangée de sièges avant, ce qui constitue un gain de place par rapport à l'état de la technique.

Dans une réalisation, le panneau de séparation comporte des dispositifs d'appui latéraux, tels que des tampons, permettant au panneau de séparation de venir en appui sur la deuxième rangée de siège lorsqu'il est en position reculée.

Conformément à l'invention, l'agencement comporte des butées destinées à être solidaires de la caisse du véhicule pour former des butées d'arrêt du panneau de séparation situées en arrière de celui-ci lorsque le panneau de séparation est en position reculée

Dans une réalisation, le panneau de séparation comporte un portillon.

Conformément à l'invention, le panneau de séparation comporte des moyens de verrouillage sur les rails latéraux, permettant le verrouillage du panneau de séparation dans chacune des deux positions, avancée et reculée.

Conformément à l'invention, le panneau de séparation comporte un dispositif de ceinturage du siège arrière central.

Dans une réalisation, le panneau de séparation comporte deux fenêtres latérales permettant le passage d'éléments de fixation des sièges arrière solidaires de la caisse du véhicule.

Dans une réalisation, le panneau de séparation comporte des dispositifs de verrouillage permettant de rendre le panneau de séparation solidaire de la caisse du véhicule lorsque le panneau de séparation est en position avancée.

Dans une réalisation, le panneau de séparation présente une inclinaison par rapport à un plan vertical proche de l'inclinaison des dossiers des sièges du véhicule.

L'invention concerne également un véhicule automobile comportant un agencement d'un cloisonnement tel que défini ci-dessus.

La présente invention sera mieux comprise à la lecture de la description détaillée qui suit, faite en référence aux dessins annexés, dans lesquels :
- la figure 1 représente une vue en perspective d'un agencement conforme à l'invention ;
- les figures 2 à 4 représentent un agencement conforme à l'invention, vu de côté dans différentes configurations.

La figure 1 représente une vue en perspective de l'agencement 1 d'un cloisonnement conforme à l'invention. L'agencement 1 comporte un panneau de séparation 10, dans l'exemple un panneau grillagé, formant une cloison de séparation entre l'habitacle d'un véhicule utilitaire et l'espace de chargement de ce véhicule. Le panneau de séparation 10 présente une forme générale sensiblement rectangulaire et possède des dimensions compatibles avec celles de la section transversale de l'espace de chargement du véhicule. Le panneau de séparation 10 comporte une structure périphérique 12, formée dans l'exemple par un assemblage de profilés de section rectangulaire. La structure périphérique 12 comporte notamment deux montants latéraux 14, 16 et une traverse inférieure 18. La structure périphérique 12 est solidaire de poutres de renfort 20, 22 perpendiculaires l'une à l'autre, séparant des panneaux grillagés 24. La structure périphérique 12 est en outre solidaire d'un montant intermédiaire 26 et d'une traverse intermédiaire 28 formant l'encadrement d'un portillon 30. Le portillon 30 est articulé au moyen de charnières 32 fixées sur le montant intermédiaire 26, et est maintenu en position fermée au moyen d'un dispositif de verrouillage 34 solidaire d'un des montants latéraux 14.

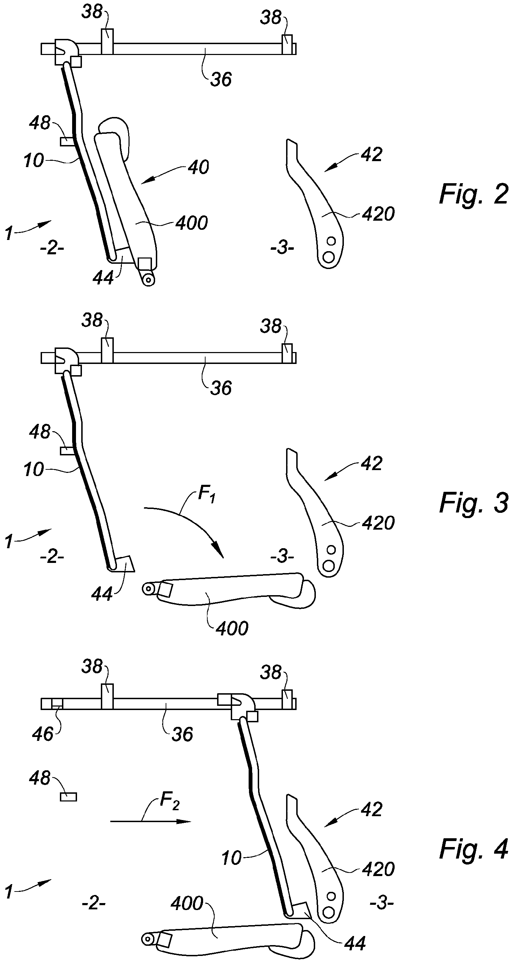

Le panneau de séparation 10 est monté coulissant sur deux rails latéraux 36, destinés à être fixés au plafond du véhicule (au moyen de quatre supports 38), les rails latéraux 36 étant alors alignés selon une direction parallèle à l'axe longitudinal du véhicule. Comme visible notamment sur les figures 2 à 4, le panneau de séparation 10 est apte à coulisser d'une position reculée, dans laquelle il se situe en arrière d'une rangée de sièges arrière, ou deuxième rangée de sièges 40, à une position avancée, dans laquelle il se situe en arrière d'une rangée de sièges avant, ou première rangée de sièges 42 (mais en avant de l'emplacement normalement occupé par les sièges arrière 400 composant la deuxième rangée de sièges 40). Le passage de la position reculée (figure 2) à la position avancée (figure 4) requiert le basculement des sièges arrière 400 dans une position repliée (figure 3, flèche F₁). Dans cette position repliée, le dossier des sièges arrière 400 se situe à un niveau plus bas que la traverse inférieure 18, ce qui permet le passage du panneau de séparation 10 vers sa position avancée (figure 4, flèche F₂).

Conformément à l'invention, le panneau de séparation 10 est autoportant. En d'autres termes, le panneau de séparation 10 est suspendu au niveau des rails latéraux 36, et est dépourvu en partie basse de tout dispositif permettant de reprendre les efforts orientés selon l'axe vertical du véhicule. Plus précisément, le panneau de séparation 10 ne comporte aucun dispositif permettant de rendre ce panneau solidaire d'un ou plusieurs des sièges arrière 400. Ainsi, le panneau de séparation 10 ne comporte aucun dispositif permettant sa fixation à l'un ou l'autre des sièges arrière 400. Le panneau de séparation 10 comporte cependant deux dispositifs latéraux permettant un appui simple du panneau de séparation 10 sur la deuxième, rangée de sièges 40. Ces deux dispositifs sont dans l'exemple des tampons 44.

On notera que, du fait du caractère autoportant du panneau de séparation 10, la traverse inférieure 18 est dimensionnée pour résister aux efforts liés à un chargement long.

Le panneau de séparation 10 comporte des moyens de verrouillage 46 sur les rails latéraux 36, permettant le verrouillage du panneau dans chacune des deux positions, avancée et reculée.

Comme visible notamment sur les figures 2 à 4, le panneau de séparation 10 est incliné par rapport à l'axe vertical du véhicule, permettant ainsi d'adapter l'inclinaison du panneau de séparation à celle des dossiers des sièges, et ainsi de limiter l'espace perdu. En outre, le panneau de séparation conforme à l'invention, du fait qu'il n'est pas solidaire, en position avancée, du dossier des sièges arrière 400 (contrairement à l'agencement connu décrit dans la demande de brevet susmentionnée), peut être positionné plus près du dossier des sièges avant 420, ce qui représente un gain d'espace supplémentaire pour le chargement. On notera que dans la position de la figure 4, le siège avant 420 situé du côté droit du véhicule peut être replié et le portillon 26 ouvert, pour accueillir un chargement long.

L'agencement 1 conforme à l'invention comporte des dispositifs d'appui latéraux destinés à être solidaires de la caisse du véhicule, sous la forme de deux butées 48. Les butées 48 sont fixées à la caisse du véhicule de manière à former une butée d'arrêt du panneau de séparation 10, en arrière de celui-ci lorsqu'il est dans sa position reculée. Les butées 48 permettent d'obtenir, en combinaison avec les tampons 44, un maintien satisfaisant du panneau de séparation 10 lorsque celui-ci est en position reculée. En outre, le panneau de séparation 10 comporte, à proximité des tampons 44, des verrous 50 permettant de rendre solidaire le panneau de séparation 10 à la caisse du véhicule lorsque celui-ci est en position avancée.

Le panneau de séparation 10 comporte dans l'exemple deux fenêtres 52 latérales, permettant le passage de boucles de fixation du dossier des sièges arrière 400, ces boucles de fixation (non représentées) étant solidaires de la caisse du véhicule.

Le panneau de séparation 10 est équipé d'un dispositif de ceinturage 54 pour le siège arrière situé au centre de la deuxième rangée de sièges 40. Ainsi, il n'est plus besoin de fixer ce dispositif à la caisse du véhicule comme dans l'art antérieur. On rend ainsi le déplacement du panneau de séparation 10 plus simple, puisque celui-ci n'est plus gêné par la ceinture de sécurité du siège arrière central.

## Revendications

1. Agencement (1) d'un cloisonnement pour un espace intérieur de chargement (2) de véhicule utilitaire, ledit agencement (1) comprenant un panneau de séparation (10) configuré pour séparer ledit espace intérieur de chargement (2) et l'habitacle (3), le panneau de séparation (10) étant apte à coulisser d'une position reculée, dans laquelle il se situe en arrière d'une deuxième rangée de sièges (40), à une position avancée, dans laquelle il se situe derrière une première rangée de sièges (42), afin d'augmenter l'espace de chargement (2) du véhicule, le panneau de séparation (10) étant monté coulissant sur deux rails latéraux (36), le panneau de séparation (10) étant autoportant, le panneau de séparation (10) étant suspendu par l'intermédiaire des rails latéraux (36), l'agencement (1) comportant des butées (48) destinées à être solidaires de la caisse du véhicule pour former des butées d'arrêt du panneau de séparation (10) situées en arrière de celui-ci lorsque le panneau de séparation (10) est en position reculée et en ce que le panneau de séparation (10) comporte des moyens de verrouillage (46) sur les rails latéraux (36), permettant le verrouillage du panneau de séparation (10) dans chacune des deux positions, avancée et reculée, l'agencement (1) du cloisonnement étant **caractérisé en ce que** le panneau de séparation (10) comportant un dispositif de ceinturage (54) du siège arrière central.

2. Agencement (1) d'un cloisonnement selon la revendication précédente, le panneau de séparation (10) comportant des dispositifs d'appui latéraux, tels que des tampons (44), permettant au panneau de séparation (10) de venir en appui sur la deuxième rangée de siège (40) lorsqu'il est en position reculée.

3. Agencement (1) d'un cloisonnement selon l'une des revendications précédentes, dans lequel le panneau de séparation (10) comporte un portillon (26).

4. Agencement (1) d'un cloisonnement selon l'une quelconque des revendications précédentes, dans lequel le panneau de séparation (10) comporte deux fenêtres latérales (52) permettant le passage d'éléments de fixation des sièges arrière (400) solidaires de la caisse du véhicule.

5. Agencement (1) d'un cloisonnement selon l'une quelconque des revendications précédentes, dans lequel le panneau de séparation (10) comporte des dispositifs de verrouillage (50) permettant de rendre le panneau de séparation (10) solidaire de la caisse du véhicule lorsque le panneau de séparation (10) est en position avancée.

6. Agencement (1) d'un cloisonnement selon l'une quelconque des revendications précédentes, dans lequel le panneau de séparation (10) présente une inclinaison par rapport à un plan vertical proche de l'inclinaison des dossiers des sièges du véhicule.

7. Véhicule automobile, comportant un agencement (1) d'un cloisonnement selon l'une des revendications précédentes.

## Patentansprüche

1. Anordnung (1) einer Trennwand für einen Innenraum (2) zum Beladen eines Nutzfahrzeugs, wobei die Anordnung (1) eine Trennwand (10) umfasst, die so konfiguriert ist, dass sie den Innenraum (2) zum Beladen und den Fahrgastraum (3) trennt, wobei die Trennwand (10) aus einer zurückgezogenen Position, in der sie sich hinter einer zweiten Sitzreihe (40) befindet, in eine vorgeschobene Position, in der sie sich hinter einer ersten Sitzreihe (42) befindet, gleiten kann, um den Laderaum (2) des Fahrzeugs zu vergrößern, wobei die Trennwand (10) verschiebbar auf zwei Seitenschienen (36) montiert ist, wobei die Trennwand (10) selbsttragend ist, wobei die Trennwand (10) über die Seitenschienen (36) aufgehängt ist, wobei die Anordnung (1) Anschläge (48) aufweist, die dazu bestimmt sind, mit dem Fahrzeugaufbau fest verbunden zu sein, um Anschläge für die Trennwand (10) zu bilden, die hinter dieser angeordnet sind, wenn sich die Trennwand (10) in der zurückgezogenen Position befindet, und wobei die Trennwand (10) Verriegelungsmittel (46) aufweist die Seitenschienen (36), die die Verriegelung der Trennwand (10) in jeder der beiden Positionen, vorwärts und rückwärts, ermöglichen, wobei die Anordnung (1) der Trennwand **dadurch gekennzeichnet ist, dass** die Trennwand (10) eine Gurtvorrichtung (54) für den zentralen Rücksitz aufweist.

2. Anordnung (1) einer Trennwand nach dem vorhergehenden Anspruch, wobei die Trennwand (10) seitliche Abstützvorrichtungen, wie zum beispiel Puffer (44), aufweist, die es der Trennwand (10) ermöglichen, sich auf der zweiten Sitzreihe (40) abzustützen, wenn sie sich in einer zurückgezogenen Position befindet.

3. Anordnung (1) einer Trennwand nach einem der vorhergehenden Ansprüche, bei der die Trennwand (10) eine Tür (26) aufweist.

4. Anordnung (1) einer Trennwand nach einem der vorhergehenden Ansprüche, bei der die Trennwand (10) zwei Seitenfenster (52) aufweist, die den Durchgang von Befestigungselementen der Rücksitze (400) ermöglichen, die mit dem Fahrzeugaufbau verbunden sind.

5. Anordnung (1) einer Trennwand nach einem der vorhergehenden Ansprüche, bei der die Trennwand (10) Verriegelungsvorrichtungen (50) aufweist, die es ermöglichen, die Trennwand (10) mit dem Fahrzeugaufbau fest zu verbinden, wenn sich die Trennwand (10) in der vorgeschobenen Position befindet.

6. Anordnung (1) einer Trennwand nach einem der vorhergehenden Ansprüche, wobei die Trennwand (10) eine Neigung in Bezug auf eine vertikale Ebene nahe der Neigung der Rückenlehnen der Fahrzeugsitze aufweist.

7. Kraftfahrzeug mit einer Anordnung (1) einer Trennwand nach einem der vorhergehenden Ansprüche.

## Claims

1. Arrangement (1) of a partition for an interior loading space (2) of a commercial vehicle, the said arrangement (1) comprising a partition panel (10) configured to separate the said interior loading space (2) and the passenger compartment (3), the partition panel (10) being slidable from a retracted position, in which it is located behind a second row of seats (40), to a forward position, in which it is located behind a first row of seats (42), in order to increase the loading space (2) of the vehicle, the partition panel (10) being slidably mounted on two side rails (36), the separation panel (10) being self-supporting, the separation panel (10) being suspended via the side rails (36), the arrangement (1) comprising stops (48) intended to be integral with the body of the vehicle to form stops of the separation panel (10) located behind the latter when the separation panel (10) is in the retracted position and in that the separation panel (10) comprises locking means (46) on the side rails (36), enabling the partition panel (10) to be locked in each of the two forward and retracted positions, the arrangement of partition (1) being **characterized in that** the partition panel (10) comprises a central rear seat belt (54).

2. Arrangement of a partition (1) according to the preceding claim, the partition panel (10) having lateral support devices, such as buffers (44), allowing the partition panel (10) to bear on the second seat row (40) when in the retracted position.

3. Arrangement of a partition (1) according to one of the preceding claims, wherein the partition panel (10) has a gate (26).

4. Arrangement of a partition (1) according to any one of the preceding claims, wherein the partition panel (10) has two side windows (52) allowing the passage of fasteners for the rear seats (400) integral with the vehicle body.

5. Arrangement of a partition (1) according to any one of the preceding claims, wherein the partition panel (10) has locking devices (50) for securing the partition panel (10) to the vehicle body when the partition panel (10) is in the advanced position.

6. Arrangement of a partition (1) according to any one of the preceding claims, wherein the partition panel (10) has an inclination with respect to a vertical plane close to the inclination of the vehicle seat backs.

7. Motor vehicle, comprising an arrangement (1) of a partition according to one of the preceding claims.
